# FASCICULE DE BREVET EUROPEEN

(11) **EP 0 918 388 B1**
(45) Date de publication et mention de la délivrance du brevet: **31.03.2010**
(21) Numéro de dépôt: 98402801.9
(22) Date de dépôt: 12.11.1998
(51) Int. Cl.: H02H 3/087

(54) **Protection contre les défauts électriques dans un système de stockage de données**
Elektrischer Fehlerschutz in einem Datenspeichersystem
Electrical fault protection in a data storage system

(30) Priorité: 20.11.1997 FR 9714580
(43) Date de publication de la demande: 26.05.1999
(73) Titulaire: Bull SAS, 78340 Les Clayes-sous-Bois (FR)
(72) Inventeur: Cargemel, Laurent, 49240 Avrillé (FR); Michaud, Gilbert, 78580 Maule (FR); Carteau, Daniel, 78180 Montigny le Bretonneux (FR)

(56) Documents cités:
- EP-A- 0 341 117
- EP-A- 0 621 600
- EP-A- 0 632 558

## Description

### Domaine technique

L'invention concerne la protection d'un système de stockage de données. Le système de stockage peut être quelconque. Le système peut être notamment un système multidisque comprenant des unités. Ces unités peuvent être des unités à mémoires de masse. Les unités à mémoire de masse qui serviront d'exemple dans le texte qui suit sont des mémoires à disques magnétiques. L'invention est particulièrement adaptée aux systèmes dotés d'un mécanisme de redondance de stockage de données. Ces systèmes sont avantageux en ce qu'ils procurent une haute disponibilité des données. La haute disponibilité se définit de manière générale comme étant le temps, mesuré en minutes, en heures ou en jours par année, d'indisponibilité d'accès à la totalité des données stockées sur les mémoires à disques.

L'invention a pour objets un procédé et un dispositif de protection ainsi qu'un système de stockage de données équipé d'un tel dispositif.

### L'art antérieur

Un système multidisque est généralement inclus dans une armoire. Un type d'armoire est décrit, par exemple, dans le brevet EP-A-0621600. Elle comporte notamment des tiroirs dans lesquels sont logées des unités à disques magnétiques. Chaque unité comprend des disques magnétiques reliés entre eux. Ainsi, lorsque l'un des disques est déconnecté, les autres continuent à fonctionner.

Le système est doté d'un mécanisme redondant de stockage de données. De ce fait, au moins un des tiroirs peut être destiné à recevoir une unité de gestion de la redondance. Cette unité de gestion de la redondance peut être un contrôleur de type RAID (Redundant Array off Inexpensive Disks) ou un adaptateur qui permettent une disponibilité optimale des données stockées sur les disques magnétiques. Les contrôleurs de type RAID sont classés selon des numéros normalisés, représentatifs de différents modes de redondance. Par exemple, la redondance de type RAID-1 met en oeuvre des disques miroirs. Selon ce mécanisme, les données sont enregistrées sur un premier disque d'une unité et en redondance sur un second disque d'une autre unité. Le second disque est physiquement distinct du premier et représente le miroir du premier. Ainsi, lorsqu'un disque n'est plus accessible, les données peuvent être accédées, en lecture et/ou en écriture, à partir de son disque miroir. Les disques miroirs se trouvent sur des unités distinctes afin de bénéficier de la haute disponibilité. Selon la redondance de type RAID-5, les données sont découpées en segments de plusieurs blocs de longueur déterminée, que l'on appelle bloc de données utiles. On associe à un nombre déterminé de segments, un segment redondant qui est composé de blocs de parité et se situe sur un autre disque associé à un autre tiroir. Selon ce mécanisme, on utilise aussi plusieurs disques physiques se trouvant chacun sur des tiroirs distincts. Les données peuvent de même être accédées en lecture et/ou en écriture, si une unité à disque n'est plus accessible.

Un mécanisme de redondance nécessite que les unités à disques soient indépendantes les unes des autres en terme d'écriture et de lecture des données. Les données stockées sur un disque doivent rester disponibles à tout moment. De même, l'écriture d'une donnée sur un disque doit être possible. Les chemins de données existant entre contrôleurs et unités doivent être indépendants. Chaque unité est reliée aux contrôleurs par l'intermédiaire d'un câble distinct. Ce câble comporte notamment, un bus de données qui représente le chemin des données, les lignes de commande des disques, etc.

Cependant, la seule et unique dépendance existante entre les unités à disques et le(s) contrôleur(s) ou adaptateur(s) est l'alimentation électrique. En d'autres mots, chaque unité à disque, contrôleur ou adaptateur est relié à un même point de distribution de l'alimentation.

Le problème se pose quand un défaut électrique, en l'occurrence un court-circuit, apparaît dans le système. Ce court-circuit peut avoir des origines diverses. Par exemple, une panne d'un disque ou d'un contrôleur, une mauvaise manoeuvre d'un opérateur peut créer involontairement un court-circuit en manipulant le système. Ainsi, un court-circuit peut être provoqué dans une unité et provoquer un courant de défaut trop important en intensité. Ce courant se propage et peut détruire sur son passage tout le matériel électrique ou électronique (composants, câbles...) se trouvant sur une même liaison électrique. On parle de propagation du défaut. Toutes les liaisons convergent vers une même source d'alimentation électrique. En conséquence, la source d'alimentation, protégée, disjoncte et le système n'est plus alimenté. Il devient totalement indisponible. La lecture ou l'écriture des données, aussi bien sur les disques de l'unité initialement défaillante que des unités contenant les disques de redondance est impossible. La conséquence de ce courant de défaut est donc grave en terme de disponibilité des données.

Une solution de l'art antérieur, décrite dans le brevet cité précédemment, consiste à utiliser des fusibles. Cette solution consiste à placer un fusible à l'entrée de chaque unité et protéger chaque unité contre un courant de défaut. De cette façon, on coupe la liaison reliant l'unité associée au court-circuit de l'alimentation. Le défaut ne se propage donc pas.

Cette solution se contente de protéger l'unité en elle-même sans se préoccuper de la position du point de distribution de l'alimentation. Cette solution ne se préoccupe pas de la position du défaut et ne protège pas le matériel électrique se trouvant en amont du fusible. La solution de l'art antérieur ne prévoit pas la possibilité d'un défaut électrique entre le fusible et le point de distribution de l'alimentation.

En outre, l'irréversibilité du fonctionnement d'un fusible en réponse à un court-circuit pose aussi un autre problème. Les fusibles sont connus pour être solidaires du circuit. Si un court-circuit se produit, et si, par exemple, le fusible est placé sur une carte d'interconnexion, tel que cela est décrit dans le brevet cité précédemment, la réparation consiste à remplacer non seulement le fusible mais aussi dans certains cas la carte d'interconnexion et les connecteurs associés. Une réparation est donc coûteuse en argent.

Un autre problème est que le courant de défaut peut avoir plusieurs origines. Les fusibles se déclencheront tant que les origines de ce courant ne seront pas toutes maîtrisées.

En outre, les fusibles sont calibrés à une certaine intensité. Il est connu que les fusibles se déclenchent au-delà de cette intensité de calibre. Un autre inconvénient est qu'ils provoquent une chute de tension non négligeable dans le système.

A ces inconvénients s'ajoute encore le fait de la remise en fonctionnement du système. Elle consiste, tout d'abord, à repérer l'unité associée au court-circuit et à remplacer l'unité en la retirant de son tiroir. Cette remise en fonctionnement du système cause un temps d'indisponibilité du système et est donc coûteuse en temps.

Pour des raisons de simplicité, on utilisera le terme « unité à contrôleur » pour désigner un contrôleur. De plus, il peut arriver que l'on utilise le terme « unité » pour désigner une unité à disques ou un contrôleur (ou adaptateur).

### Sommaire de l'invention

Un premier but de l'invention est de procurer une disponibilité optimale du système en protégeant le système contre un défaut électrique, ceci quel que soit l'endroit où se situe le défaut électrique dans le système.

Un second but visé est une détection rapide d'un courant de défaut trop important en intensité.

Un troisième but visé est de permettre une remise en service du système rapide et donc une disponibilité optimale de ce système.

Un quatrième but visé est la réduction considérable des coûts de maintenance.

Un cinquième but visé est la simplicité d'utilisation du dispositif de protection.

L'invention est défini par un procédé selon la revendication 1 et un dispositif selon la revendication 4.

L'invention a aussi pour objet un système multidisque pourvu d'un dispositif de protection, caractérisé en ce que le dispositif met en oeuvre le procédé et/ou est celui défini précédemment.

L'invention sera mieux comprise à la lecture de la description qui suit, donnée à titre d'exemple et faite en référence aux dessins annexés.

### Dans les dessins:

la figure 1 est une vue synoptique en coupe d'un système multidisque pourvu d'un dispositif de protection conformément à l'invention.

la figure 2 est une vue schématique partielle illustrant un ensemble de gestion EG représenté sur la figure 1.

### Description détaillée d'exemples illustrant l'invention

Pour simplifier la description, les mêmes éléments illustrés dans les dessins portent les mêmes références.

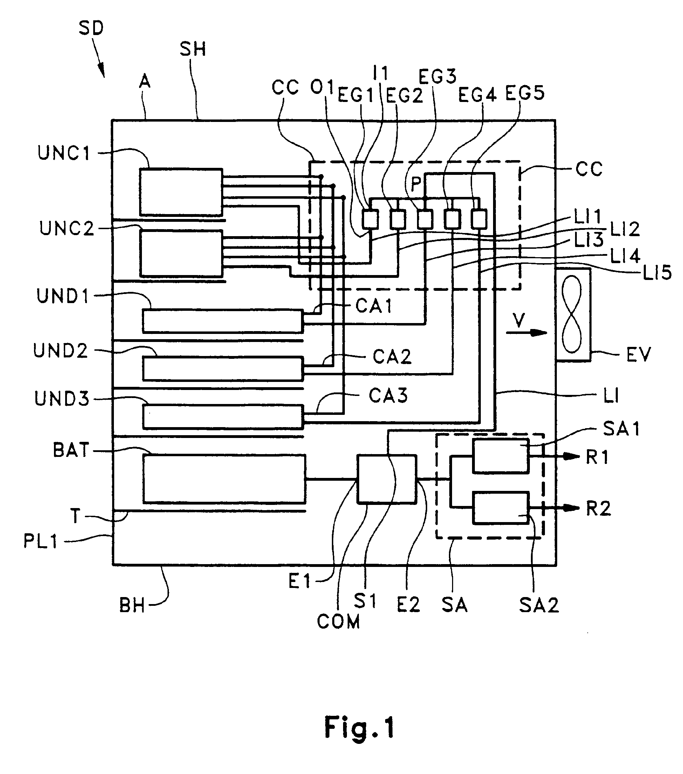

La figure 1 représente une vue synoptique d'un système SD de stockage de données multidisque. Ce système SD est contenu dans une armoire A. Cette armoire A peut avoir une forme quelconque. Dans l'exemple illustré, cette armoire A est de forme parallélépipédique comprenant quatre parois latérales verticales PL, une paroi supérieure horizontale SH, et une base horizontale BH.

Le système SD est doté d'un mécanisme de redondance procuré par une unité de gestion de la redondance. A cet effet, dans certains systèmes, on utilise au moins une unité à contrôleur de type RAID tel que défini dans le préambule. Dans d'autres systèmes, on préfère utiliser une unité à adaptateur. Dans ce dernier cas, l'unité adaptateur est chargée de la connexion, vers un ou plusieurs hôtes ou unité centrale, des unités à disques. Dans le suite de la description, on utilisera à titre d'exemple une unité à contrôleur. Dans l'exemple illustré, l'armoire comporte deux unités à contrôleur UNC1 et UNC2 fonctionnant en redondance. Cette redondance signifie qu'en cas de panne de l'un des deux contrôleurs, le second assure, sans interruption, le fonctionnement du système SD. Le système SD comprend au moins deux unités à disques. Le nombre d'unités à disques dans un système de stockage de données multidisque dépend du type de redondance utilisé. Dans l'exemple illustré, on a représenté trois unités à disques UND1, UND2 et UND3. Ce nombre n'est pas caractéristique d'un type de redondance et n'est donné qu'à titre indicatif. Chaque unité est contenue dans un tiroir T associé. De préférence, les tiroirs sont situés sur une des parois latérales PL1 de l'armoire A.

Chacune des deux unités à contrôleur UNC1 et UNC2 est reliée aux trois unités à disques UND1, UND2 et UND3 par l'intermédiaire de trois câbles respectifs CA1, CA2 et CA3. Le câble CA1 relie en série les deux contrôleurs UNC1 et UNC2 et l'unité à disques UND1. De même, le câble CA2 relie en série les deux contrôleurs UNC1 et UNC2 et l'unité à disques UND2. Et enfin, le câble CA3 relie en série les deux contrôleurs UNC1 et UNC2 et l'unité à disques UND3. Un câble, tel que mentionné dans le préambule de la description, comprend le chemin des données. Le chemin des données est un bus normalisé, par exemple, de type connu « Fast/Wide single ended SCSI ». Un câble comprend des lignes de commande, notamment les lignes de commande des disques. Les câbles CA1, CA2 et CA3 sont physiquement distincts les uns des autres. Les chemins de données existant entre les contrôleurs et les unités à disques sont donc indépendants pour ce qui est de l'écriture ou de la lecture des données sur les disques.

Le système SD comprend une source d'alimentation électrique SA, une batterie BAT, et un commutateur COM. Le commutateur COM comporte deux entrées E1 et E2, et une sortie S. L'ensemble illustré, constitué par la source d'alimentation électrique SA, le commutateur COM, et la batterie BAT, sont proches de la base horizontale BH.

Le commutateur COM a son entrée E1 reliée à la batterie BAT et son entrée E2 reliée à la source d'alimentation électrique SA. Cela signifie que si la source d'alimentation SA s'interrompt, c'est la batterie BAT qui continue à assurer l'alimentation électrique. La sortie S de ce commutateur est reliée à une liaison LI. Cette liaison LI comporte une ligne de tension, et une ligne reliée à la masse. Cette liason LI se divise à partir d'un point P de distribution de l'alimentation en nombre égal au nombre d'unités dans le système SD. Un point P de distribution de l'alimentation se définit comme étant le point de départ de la distribution de l'alimentation en énergie électrique. Dans l'exemple illustré, la liaison LI se divise en cinq liaisons électriques respectivement LI1, LI2, LI3, LI4, LI5 et se connectent aux unités respectives UNC1, UNC2, UND1, UND2 et UND3. En outre, le système comporte une carte d'interconnexion CC. Cette carte CC procure un meilleur agencement de la connectique, dans l'armoire A, entre les unités à disques UND1-UND3 et les unités à contrôleurs UNC1 et UNC2.

Et enfin, le système SD comporte un ensemble de ventilateurs EV. Cet ensemble ventilateurs EV est situé sur une des parois latérales et crée un flux d'air dans l'armoire. De préférence, cet ensemble de ventilateur EV est situé sur une paroi latérale PL2 opposée à la paroi latérale PL1. Des ouvertures se trouvent à la fois sur la paroi PL1 et sur les unités elle-même. Un courant d'air se crée donc dans l'armoire A. La direction du flux dans l'armoire A est représentée par une flèche V sur la figurel.

Un tel système présente un problème lorsqu'un un défaut électrique survient dans le système SD. Un court-circuit peut être provoqué dans une unité mais aussi sur une liaison LI1-LI5 qui relie respectivement les unités UNC1, UNC2, UND1, UND2 et UND3 au point P de distribution. Cette situation telle que mentionnée dans l'introduction crée un courant de défaut ayant des conséquences graves dans le système SD en terme de disponibilité.

Le procédé de protection consiste à protéger la liaison électrique LI1-LI5 associée à une unité à proximité du point P de distribution. Le procédé consiste à couper automatiquement la liaison électrique LI1-LI5 entre l'unité respective UNC1, UNC2, UND1, UND2 et UND3 et le point P de distribution de l'alimentation lorsqu'un défaut électrique survient dans l'unité associée au défaut ou sur la liaison électrique elle-même, et ensuite de rétablir automatiquement la liaison électrique après disparition de ce défaut.

Le dispositif de protection conforme à l'invention comporte sur chaque liaison électrique (LI1-LI5) comporte, à proximité du point (P) de distribution de l'alimentation, un ensemble de gestion (EG1-EG5) pour le déclenchement de l'ouverture de la liaison correspondante (LI1-LI5). En outre, l'ensemble de gestion (EG1-EG5) gère la fermeture automatique de la liaison correspondante (LI1-LI5). Chaque ensemble EG1-EG5 possède une entrée respective I1-15 et une sortie respective O1-O5. Pour des raisons de clarté, on représenté uniquement, sur la figure 1, l'entrée Il et la sortie O1 associées à l'ensemble de gestion EGI. L'entrée I1-I5 est reliée à une unité respectivement UNC1, UNC2, UND1, UND2 et UND3. toutes les sorties 01-05 sont reliées au point P de distribution de l'alimentation. Les ensembles de gestion EG1-EG5 gèrent automatiquement l'ouverture et la fermeture de la liaison correspondante LI1-LI5 qui leur est associée, non seulement lorsqu'un défaut électrique, en l'occurrence un court-circuit, survient dans l'unité correspondante UNC1-UNC2 et UND1-UND3 mais aussi lorsqu'un défaut électrique survient sur la liaison associée LI1-LI5 qui relie cette unité au point P de distribution de l'alimentation. L'ensemble de gestion EG1-EG5 détecte donc le courant de défaut sur la liaison associée LI1-LI5. Un courant de défaut se défini comme ayant une intensité du courant supérieure à celle du régime de fonctionnement normal. De même, un régime de fonctionnement normal est caractérisé par un intervalle incluant des valeurs d'intensités du courant. Au delà de cet intervalle, le courant est un courant de défaut. L'ensemble de gestion situé à proximité du point P de distribution de l'alimentation permet aux différentes unités UNC1-UNC2 et UND1-UND3 d'être indépendantes les unes des autres vis-à-vis d'un défaut électrique. La position de l'ensemble de gestion protège donc de façon optimale une unité UNC1-UNC2 et UND1-UND3 et la liaison électrique correspondante LI1-LI5.

Selon une autre caractéristique de l'invention, la probabilité de défaut électrique en amont du point P de distribution de l'alimentation doit être nulle. Dans l'exemple illustré, le système SD comporte au moins deux liaisons LI reliées en redondance. De plus, la liaison LI est dans un environnement protégé, inaccessible par un opérateur. La probabilité (au sens mathématiques du terme) de défaut électrique sur la liaison LI, qui relie la sortie du commutateur COM au point P de distribution de l'alimentation, est donc pratiquement nulle. La liaison LI relie la sortie S du commutateur COM à la carte d'interconnexion CC. Le point P de distribution de l'alimentation est situé sur la carte de connexion CC. Dans un autre exemple, le point P peut être situé à proximité de la source d'alimentation SA. La liaison LI peut donc être assimilée à un point de connexion. Il est évident, dans ce dernier exemple, qu'un défaut électrique n'a pas lieu d'être entre le point P et la source d'alimentation SA.

Dans l'exemple illustré, les ensembles de gestion EG1-EG5 sont situés sur la carte d'interconnexion CC. la carte d'interconnexion est située à proximité de la paroi supérieure horizontale SH. De plus, la perpendiculaire au plan de la carte d'interconnexion CC a une direction perpendiculaire à la direction du flux d'air dans l'armoire. Le placement de cette carte CC de cette façon permet de laisser un espace vide EV entre les ventilateurs V et unités. Ainsi s'effectue une meilleure ventilation et un meilleur passage de l'air dans l'armoire A par l'intermédiaires des ouvertures se trouvant, sur la face PL1 sur laquelle sont insérées unités et sur les unités elles-mêmes UNC1-UNC2 et UND1-UND3. Un courant d'air se crée donc facilement dans l'armoire A.

La source d'alimentation électrique SA comporte au moins un générateur d'alimentation électrique. Dans l'exemple illustré, la source SA comprend deux générateurs d'alimentation SA1 et SA2. Les deux générateurs SA1 et SA2 sont montés en parallèle et fonctionnent en redondance. Ces deux générateurs sont reliés à l'entrée E2 du commutateur COM. D'autre part, chaque générateur d'alimentation électrique SA1 et SA2 est relié à un réseau de distribution. Dans l'exemple illustré, les générateurs d'alimentation SA1 et SA2 sont reliés à deux réseaux de distribution respectifs R1 et R2 indépendants entre eux. Cette architecture protège le système SD contre une panne d'un générateur d'alimentation électrique, par exemple SA1. Dans une telle situation, le second générateur d'alimentation SA2 alimente le système. Cette redondance des générateurs améliore la sécurité du système en terme de disponibilité.

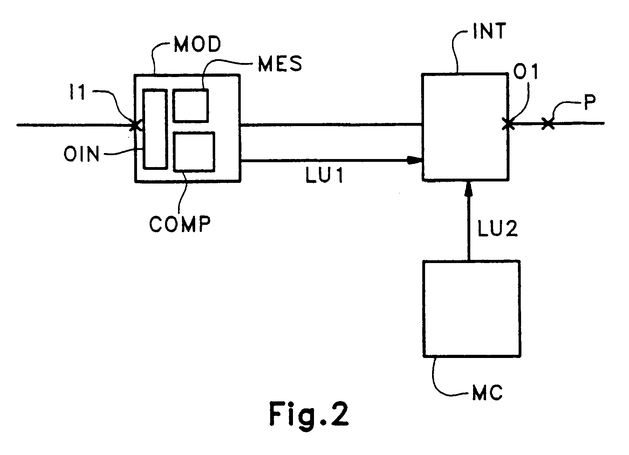

On décrira maintenant, avec référence aux figures 1 et 2 un mode de réalisation conforme à la présente invention. La figure 2 représente une vue schématique et détaillée d'un ensemble de protection, par exemple EG1.

Dans l'exemple illustré, l'ensemble de gestion EG1 est un disjoncteur à réarmement automatique. Sur cette figure, on a représenté l'entrée I1 et la sortie O1 du disjoncteur. Ce disjoncteur comporte un module MOD incluant un outil de mesure MES de l'intensité d'un courant et un outil de comparaison COMP de ce courant à une valeur de référence. Le disjoncteur comporte un interrupteur INT et un micro-contrôleur MC . Le module MOD et l'interrupteur INT possède chacun une entrée et une sortie.

Dans cet exemple, l'entrée I1 de l'ensemble EG1 correspond à l'entrée du module MOD de mesure du courant. La sortie du module MOD est reliée à l'entrée de l'interrupteur INT et la sortie O1 de l'interrupteur INT est reliée au point P de distribution de l'énergie électrique. Conformément à l'invention, la sortie O1 de l'interrupteur INT est située à proximité du point P de distribution de l'alimentation. Une liaison de commande unidirectionnelle LU1 relie le module MOD à l'interrupteur INT. Cette liaison commande l'ouverture de l'interrupteur INT. Et enfin, une liaison unidirectionnelle LU2 relie le micro-contrôleur à l'interrupteur INT pour transmettre un signal de commande vers l'interrupteur.

Le module MOD mesure constamment le courant circulant sur la liaison électrique LI1 associée à l'unité à disques UND1 et détecte un courant de défaut sur la liaison LI1. A cet effet, le module MOD compare cette valeur à une valeur de référence prédéfinie. Cette valeur de référence est caractéristique d'un bon fonctionnement de l'unité UND1 et de la liaison électrique LI1 associée. Lors d'un fonctionnement nomal du système SD, le micro-contrôleur MC commande la fermeture de l'interrupteur INT par l'intermédiaire de la liaison de commande LU2. Suite à un défaut électrique dans l'unité UND1 ou sur la liaison associée LI1, le module MOD détecte un courant trop important en intensité. Le module MOD commande l'ouverture, par l'intermédiare de la liaison LU1, de l'interrupteur INT. Suite à l'ouverture de l'interrupteur, le micro-contrôleur tente périodiquement de refermer automatiquement l'interrupteur INT et tente donc de rétablir la connexion entre l'alimentation et l'unité UND1. De nouvelles mesures et comparaisons sont effectuées par l'intermédiaire du module MOD pendant chaque tentative de réarmement. Si le défaut électrique a disparu, le signal de commande issu du module MOD s'estompe et la fermeture de l'interrupteur INT est maintenue. Le disjoncteur se réarme donc automatiquement. Si le défaut électrique subsiste, l'interrupteur INT reste ouvert, et l'unité UND1 est déconnectée de l'alimentation SA.

Dans un autre exemple, le module MOD inclut un module supplémentaire. Dans un système multidisque, il peut se produire des pointes de courant. Ces pointes de courant ne sont pas dues à un défaut électrique dans une unité ou sur la liaison associée. Ces pointes sont inévitables dans un système électrique, par exemple lors du démarrage du système. Une pointe de courant est une brève impulsion. Pour éviter que l'interrupteur ne se déclenche à la suite d'une pointe de courant, qui est une impulsion relativement brève et suffisante en intensité pour être détectée par le module MOD, il est nécessaire de munir le module MOD d'un outil d'intégration OIN (au sens mathématiques du terme). Cet outil OIN a pour fonction de transformer la pointe de courant en courant d'intensité plus ou moins constante. Une fois transformée en une valeur plus ou moins constante, ce courant de pointe est mesuré et comparé par l'intermédiare du module MOD à une valeur de référence tel que décrit précédemment. La suite du fonctionnement reste identique a celle expliquée dans le paragraphe précédent.

Ainsi, la coupure et le rétablissement de la liaison LI1 sont donc gérés automatiquement. On protège donc l'unité à disques correspondante UND1 ainsi que la liaison électrique associée LI1 contre un courant de défaut.

Dans un autre exemple, l'ensemble EG est un matériau à déclenchement et à réarmement automatique. Ce type de matériau est capable de créer une variation importante de sa résistance en fonction la température ou de l'intensité parcourue dans la liaison électrique. Normalement de quelques milliohms lors d'un bon fonctionnement de l'unité à disques ou à contrôleur, la résistance de ce matériau augmente suffisamment pour limiter le courant à quelques milliampères. L'unité associée, en cas de défaut, sera donc déconnectée du point de distribution et des autres unités. La liaison est donc déconnectée du point P de distribution. Suite à la réparation de l'unité et donc à la disparition du courant de défaut, le matériau utilisé retrouve son état normal et sa résistance baisse. Ainsi si le défaut a plusieurs origines, le fusible retrouvera son état normal seulement une fois que tous les défauts auront disparu. Une fois la résistance d'origine retrouvée, à savoir quelques milliohms, la liaison électrique est à nouveau connectée au reste du système. Ce type de protection présente un certain temps de réaction et ne sera pas adapté à tous les cas d'emploi.

D'une manière générale, on peut dire que l'invention a pour objet un procédé de protection pour un système SD de stockage multidisque doté d'un mécanisme de redondance, ledit système comprenant au moins deux unités à disques UND1-UND3 et au moins une unité de gestion de la redondance UNC1-UNC2, un point P de distribution de l'alimentation électrique, chaque unité UND1-UND3 et UNC1-UNC2 étant reliée au point P de distribution par l'intermédiaire d'une liaison électrique respectivement LI1-LI5. Le procédé, conforme à l'invention, consiste à protéger la liaison électrique associée à chaque unité à proximité du point P de distribution. Le procédé consiste à couper automatiquement la liaison électrique LI1-LI5 entre une unité et le point P de distribution de l'alimentation lorsqu'un défaut électrique survient dans l'unité associée au défaut ou sur la liaison elle-même, et ensuite de rétablir automatiquement cette liaison électrique LI1-LI5 après disparition de ce défaut.

Il en résulte un dispositif de protection dont chaque liaison électrique LI1-LI5 comporte, à proximité du point P de distribution de l'alimentation, un ensemble de gestion EG1-EG5 de déclenchement de l'ouverture de la liaison correspondante LI1-LI5.

Dans l'exemple illustré de la figure 2, l'ensemble de gestion EG peut être un disjoncteur. on a vu que l'ensemble de gestion EG1-EG5 inclut un module MOD pour mesurer un courant et détecter un courant de défaut sur la liaison respective LI1-LI5. Un courant de défaut a une intensité du courant supérieure à celle du régime de fonctionnement normal. Comme le montre la description, l'ensemble de gestion EG1-EG5 comprend un micro-contrôleur MC pour commander automatiquement la fermeture d'un interrupteur INT sur la liaison respective LI1-LI5 et tenter périodiquement de rétablir l'alimentation dans l'unité associée UND1-UND3 et UNC1-UNC2. On a vu aussi que le système SD peut inclure un outil d'intégration OIN (au sens mathématiques du terme) pour transformer une pointe de courant en courant d'intensité plus ou moins constante.

Comme cela ressort de la description, l'ensemble de gestion peut être un matériau capable de créer une variation importante de sa résistance en fonction de l'intensité du courant circulant sur une liaison électrique.

On a vu aussi que la source d'alimentation électrique SA comprend au moins deux générateurs d'alimentation (SA1,SA2) en parallèle et en ce que chaque générateur est relié à un réseau de distribution respectif (R1) et (R2) indépendants entre eux..

Il ressort aussi de la description que l'invention offre de nombreux avantages. Elle offre au système de stockage de données une disponibilité optimale des données, et ce en protégeant une des pièces maîtresses de la redondance à savoir le chemin des données. Elle remédie au problème de courant de défaut causé à la suite d'un court-circuit. Quel que soit la position du défaut électrique dans le système, le courant de défaut qui en découle ne se propagera pas au delà du point P de distribution de l'alimentation. Un autre avantage de l'invention est qu'elle protège non seulement les unités mais aussi le câble associé à ces unités. Les unités ne sont donc plus dépendantes vis-à-vis du défaut électrique. Un autre avantage est de permettre une remise en service rapide du système en utilisant un ensemble de gestion qui soit réarmable automatiquement. Cette caractéristique permet de réduire les coûts de maintenance considérablement. Il n'est pas nécessaire de remplacer de disjoncteur chaque fois qu'un court-circuit survient dans le système. Et enfin, un dernier avantage de l'invention est la simplicité d'utilisation du dispositif de protection , ainsi que le faible coût de fabrication et de montage.

## Revendications

1. Procédé de protection d'un système (SD) de stockage multidisque doté d'un mécanisme de redondance, ledit système comprenant au moins deux unités à disques (UND1-UND3) et au moins une unité de gestion de la redondance (UNC1,UNC2), un point P de distribution de l'alimentation électrique, chaque unité (UND1-UND3 et UNC1-UNC2) étant reliée au point (P) de distribution par l'intermédiaire d'une liaison électrique respective (LI1-LI5),
**caractérisé en ce qu'**il comprend les étapes suivantes réalisées sur chaque liaison électrique (LI1 - LI5) :
- détection d'un défaut électrique dans l'unité associée au défaut ou sur la liaison électrique elle-même,
- coupure automatique de la liaison électrique (LI1 - LI5) entre l'unité et le point (P) de distribution lors de la détection d'un défaut électrique, et
- rétablissement automatique de ladite liaison électrique (LI1 - L15) après disparition de ce défaut.

2. Procédé selon la revendication 1, **caractérisé en ce que** l'étape de détection d'un défaut électrique comprend :
- une étape de mesure du courant circulant et
- une étape de détection d'un courant de défaut sur la liaison respective.

3. Procédé selon la revendication 1 ou la revendication 2, **caractérisé en ce que** l'étape de rétablissement automatique de la liaison électrique comprend une tentative de rétablissement de ladite liaison électrique exécutée périodiquement et automatiquement jusqu'à disparition dudit défaut.

4. Dispositif de protection d'un système SD de stockage multidisque doté d'un mécanisme de redondance, ledit système comprenant au moins deux unités à disques (UND1-UND3) et au moins une unité de gestion de la redondance (UNC1, UNC2), un point (P) de distribution de l'alimentation électrique relié à une source d'alimentation électrique (SA), chaque unité (UND1-UND3, UNC1-UNC2) étant reliée au point (P) de distribution par l'intermédiaire d'une liaison électrique respective (LI1-LI5),
**caractérisé en ce que** chaque liaison électrique (LI1-LI5) comporte, à proximité du point (P) de distribution de l'alimentation, un ensemble de gestion (EG1-EG5) pour le déclenchement de l'ouverture de la liaison correspondante (LI1-LI5) lors de la détection d'un défaut électrique dans l'unité associée au défaut ou sur la liaison électrique elle-même, ledit ensemble de gestion (EG1-EG5) étant apte à gérer la fermeture automatique de la liaison correspondante (LI1-LI5) après disparition de ce défaut.

5. Dispositif selon la revendication 4, **caractérisé en ce que** l'ensemble de gestion (EG1-EG5) inclut un module MOD pour mesurer un courant et détecter un courant de défaut sur la liaison respective (LI1-LI5).

6. Dispositif selon l'une des revendications 4 à 5, **caractérisé en ce que** l'ensemble de gestion (EG1-EG5) comprend un micro-contrôleur MC pour commander automatiquement la fermeture d'un interrupteur INT sur la liaison respective LI1-LI5 et tenter périodiquement de rétablir l'alimentation dans l'unité associée (UND1-UND3, UNC1-UNC2).

7. Dispositif selon l'une des revendications 4 à 6, **caractérisé en ce qu'**un courant de défaut a une intensité du courant supérieure à celle du régime de fonctionnement normal.

8. Dispositif selon l'une des revendications 4 à 7, **caractérisé en ce que** la liaison LI est dans un environnement protégé, inaccessible par un opérateur.

9. Dispositif selon l'une des revendications 4 à 7, **caractérisé en ce que** la liaison LI est un point de connexion.

10. Système de stockage de données pourvu d'un dispositif de protection, **caractérisé en ce que** ledit système met en oeuvre le procédé défini par l'une des revendications 1 à 3 ou est défini par l'une des revendications 4 à 9.

## Claims

1. Method for protecting a multidisk storage system (SD) provided with a redundancy mechanism, said system including at least two disk units (UND1-UND3) and at least one redundancy control unit (UNC1, UNC2), an electric power supply distribution point P, each unit (UND1-UND3 and UNC1-UNC2) being connected to the distribution point (P) by means of a respective electrical line (L11-L15),
**characterised in that** it includes the following steps carried out on each electrical line (L11-L15):
- detection of an electrical fault in the unit associated with the fault or on the electrical line itself,
- automatic disconnection of the electrical line (L11-L15) between the unit and the distribution point (P) when an electrical fault is detected, and
- automatic reconnection of said electrical line (L11-L15) after disappearance of this fault.

2. Method according to Claim 1, **characterised in that** the step of detecting an electrical fault includes:
- a step of measuring the circulating current and
- a step of detecting a fault current on the respective line.

3. Method according to Claim 1 or Claim 2, **characterised in that** the step of automatically reconnecting the electrical line includes an attempt to reconnect said electrical line carried out periodically and automatically until said fault has disappeared.

4. Protection device of a multidisk storage system SD provided with a redundancy mechanism, said system including at least two disk units (UND1-UND3) and at least one redundancy control unit (UNC1, UNC2), an electric power supply distribution point (P) connected to an electric power source (SA), each unit (UND1-UND3, UNC1-UNC2) being connected to the distribution point (P) by means of a respective electrical line (LI1-LI5),
**characterised in that** each electrical line (LI1-LI5) comprises, near the power supply distribution point (P), a control unit (EG1-EG5) for triggering the opening of the corresponding line (LI1-LI5) when an electrical fault is detected in the unit associated with the fault or on the electrical line itself, said control unit (EG1-EG5) being capable of managing the automatic closing of the corresponding line (LI1-LI5) after disappearance of this fault.

5. Device according to Claim 4, **characterised in that** the control unit (EG1-EG5) includes a module MOD for measuring a current and detecting a fault current on the respective line (LI1-LI5).

6. Device according to one of Claims 4 to 5, **characterised in that** the control unit (EG1-EG5) includes a microcontroller MC for automatically controlling the closing of a switch INT on the respective line LI1-LI5 and periodically attempting to reconnect the power supply in the associated unit (UND1-UND3, UNC1-UNC2).

7. Device according to one of Claims 4 to 6, **characterised in that** a fault current has an intensity of current higher than in normal operating conditions.

8. Device according to one of Claims 4 to 7, **characterised in that** the line LI is in a protected environment, inaccessible by an operator.

9. Device according to one of Claims 4 to 7, **characterised in that** the line LI is a connection point.

10. Data storage system provided with a protection device, **characterised in that** said system implements the method defined by one of Claims 1 to 3 or is defined by one of Claims 4 to 9.

## Patentansprüche

1. Verfahren zum Schutz eines Mehrplatten-Speichersystems (SD), das mit einem Redundanzmechanismus versehen ist, das System umfassend wenigstens zwei Platteneinheiten (UND1 - UND3) und wenigstens eine Redundanzsteuerungseinheit (UNC1, UNC2), einen Verteilungspunkt (P) der elektrischen Versorgung, wobei jede Einheit (UND1 - UND3 und UNC1 - UNC2) jeweils über eine elektrische Verbindung (LI1 - LI5) mit dem Verteilungspunkt (P) verbunden ist,
**dadurch gekennzeichnet, dass** das Verfahren die folgenden Schritte umfasst, die auf jeder elektrischen Verbindung (LI1 - LI5) realisiert werden:
- Feststellen eines elektrischen Fehlers in der Einheit, die zu dem Fehler gehört, oder auf der elektrischen Verbindung selbst,
- automatisches Unterbrechen der elektrischen Verbindung (LI1 - LI5) zwischen der Einheit und dem Verteilungspunkt (P) beim Feststellen eines elektrischen Fehlers, und
- automatisches Wiederherstellen der genannten elektrischen Verbindung (LI1 - LI5) nach dem Verschwinden dieses Fehlers.

2. Verfahren gemäß Anspruch 1, **dadurch gekennzeichnet, dass** der Schritt des Feststellens eines elektrischen Fehlers umfasst:
- einen Schritt des Messens des fließenden Stroms, und
- einen Schritt des Feststellens eines Fehlerstroms auf der jeweiligen Verbindung.

3. Verfahren gemäß Anspruch 1 oder Anspruch 2, **dadurch gekennzeichnet, dass** der Schritt des automatischen Wiederherstellens der elektrischen Verbindung einen periodisch und automatisch bis zum Verschwinden des genannten Fehlers durchgeführten Versuch des Wiederherstellens der genannten elektrischen Verbindung umfasst.

4. Vorrichtung zum Schutz eines Mehrplatten-Speichersystems (SD), das mit einem Redundanzmechanismus versehen ist, das System umfassend wenigstens zwei Platteneinheiten (UND1 - UND3) und wenigstens eine Redundanzsteuerungseinheit (UNC1, UNC2), einen Verteilungspunkt (P) der elektrischen Versorgung, der mit einer elektrischen Versorgungsquelle (SA) verbunden ist, wobei jede Einheit (UND1 - UND3, UNC1 - UNC2) jeweils über eine elektrische Verbindung (LI1 - LI5) mit dem Verteilungspunkt (P) verbunden ist,
**dadurch gekennzeichnet, dass** jede elektrische Verbindung (LI1 - LI5) in der Nähe des Versorgungsverteilungspunktes (P) eine Steuerungsgruppe (EG1 - EG5) umfasst zum Auslösen der Öffnung der entsprechenden Verbindung (LI1 - LI5), wenn ein elektrischer Fehler in der zu dem Fehler gehörenden Einheit oder auf der elektrischen Verbindung selbst festgestellt wird, wobei die Steuerungsgruppe (EG1 - EG5) geeignet ist, das automatische Schließen der entsprechenden Verbindung (LI1 - LI5) nach dem Verschwinden des Fehlers zu steuern.

5. Vorrichtung gemäß Anspruch 4, **dadurch gekennzeichnet, dass** die Steuerungsgruppe (EG1 - EG5) ein Modul (MOD) zum Messen eines Stroms und zum Feststellen eines Fehlerstroms auf der jeweiligen Verbindung (LI1 - LI5) beinhaltet.

6. Vorrichtung gemäß einem der Ansprüche 4 bis 5, **dadurch gekennzeichnet, dass** die Steuerungsgruppe (EG1 - EG5) einen Mikrocontroller MC umfasst zur Steuerung des automatischen Schließens eines Schalters INT auf der jeweiligen Verbindung LI1 - LI5 und um periodisch zu versuchen, die Versorgung in der zugeordneten Einheit (UND1 - UND3, UNC1 - UNC2) wiederherzustellen.

7. Vorrichtung gemäß einem der Ansprüche 4 bis 6, **dadurch gekennzeichnet, dass** ein Fehlerstrom eine höhere Stromstärke aufweist als diejenige im Fall des normalen Funktionierens.

8. Vorrichtung nach einem der Ansprüche 4 bis 7, **dadurch gekennzeichnet, dass** sich die Verbindung LI in einer geschützten Umgebung befindet, die für Bedienpersonal unerreichbar ist.

9. Vorrichtung nach einem der Ansprüche 4 bis 7, **dadurch gekennzeichnet, dass** die Verbindung LI ein Anschlusspunkt ist.

10. Datenspeichersystem mit einer Schutzvorrichtung, **dadurch gekennzeichnet, dass** das System das Verfahren nach einem der Ansprüche 1 bis 3 verwendet oder durch einen der Ansprüche 4 bis 9 definiert ist.
